(19) Europäisches Patentamt
European Patent Office
Office européen des brevets

(11) **EP 4 102 419 A1**

(12) **EUROPEAN PATENT APPLICATION**

(43) Date of publication:
**14.12.2022  Bulletin 2022/50**

(21) Application number: **21179161.1**

(22) Date of filing: **13.06.2021**

(51) International Patent Classification (IPC):
**G06N 20/10** (2019.01)   **G06N 7/00** (2006.01)
**G06N 3/04** (2006.01)   **G06N 3/08** (2006.01)

(52) Cooperative Patent Classification (CPC):
**G06N 20/10; G06N 3/0454; G06N 3/0472;
G06N 3/084; G06N 7/005**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Inception Institute of Artificial
Intelligence, Ltd.
Abu Dhabi (AE)**

(72) Inventors:
• **DERAKHSHANI, Mohammad
  Amsterdam (NL)**
• **ZHEN, Xiantong
  Abu Dhabi (AE)**
• **SHAO, Ling
  Abu Dhabi (AE)**
• **SNOEK, Cees, G.M.
  Amsterdam (NL)**

(74) Representative: **Boult Wade Tennant LLP
Salisbury Square House
8 Salisbury Square
London EC4Y 8AP (GB)**

(54) **METHOD AND SYSTEM FOR KERNEL CONTINUING LEARNING**

(57)   Methods, systems, and techniques for kernel continuing learning. A dataset is obtained that corresponds to a classification task. Feature extraction is performed on the dataset using an artificial neural network. A kernel is constructed using features extracted during that feature extraction for use in performing the classification task. More particularly, during training, a coreset dataset corresponding to the classification task is saved; and during subsequent inference, the coreset dataset is retrieved and used to construct a task-specific kernel for classification.

**FIG. 1A**

EP 4 102 419 A1

115

Memory
114

Read

Coreset
Retrieval
118

$C_t$

Feature
Extraction
106

Random
Feature
Generation
108

Kernel
Computation
110

Classifier
112

Testing
Database
116

$X$

Features

FIG. 1B

**Description**

TECHNICAL FIELD

The present disclosure is directed at methods, systems, and techniques for kernel continual learning.

BACKGROUND

Dataset classification can be performed by computer-implemented machine learning models, such as artificial neural networks. For example, when a dataset comprises images of objects, a computer may be used to implement an object classifier configured to classify each of the objects using an artificial neural network by determining which of several different types of objects each of the depicted objects most closely resembles. The artificial neural network performs feature extraction and classification of the depicted objects.

A classifier can be used to perform multiple tasks, such as classifying different types of objects. Using the same classifier for multiple tasks can, in some circumstances, result in a problem known as "catastrophic forgetting" which may generally refer to catastrophic loss of previously learned information. For example, this may include the tendency of an artificial neural network to forget past knowledge and learned information upon learning information.

SUMMARY

According to a first aspect, there is provided a method comprising: obtaining a dataset corresponding to a classification task; performing feature extraction on the dataset using an artificial neural network; and constructing a kernel using features extracted during the feature extraction for use in performing the classification task.

The dataset may be a current task dataset and the classification task may be a current classification task, and the method may further comprise selecting a coreset dataset from the current task dataset, wherein the feature extraction is performed on the coreset dataset, and wherein the kernel is constructed using the features extracted from the coreset dataset.

The method may further comprise performing the current classification task by applying the kernel to features extracted from the current task dataset.

The feature extraction may also be performed on elements of the current task dataset other than the coreset dataset, and performing the current classification task may comprise applying the kernel to features extracted from elements of the current task dataset other than the coreset.

The coreset dataset may be selected uniformly between existing classes of the current task dataset.

The dataset may be an input query dataset, and the method may further comprise: obtaining a task identifier that corresponds to the input query dataset; retrieving, using the task identifier, a coreset dataset corresponding to a classification task to be performed on the input query dataset, wherein the feature extraction is performed on the coreset dataset and on the input query dataset, and wherein the kernel is constructed using the features extracted from the coreset dataset; and classifying the input query dataset by applying the kernel to the features extracted from the input query dataset.

The dataset may comprise an image.

Constructing the kernel may comprise applying kernel ridge regression.

The artificial neural network may comprise at least one of a convolutional neural network and a multilayer perceptron.

The method may further comprise determining random Fourier features from the coreset dataset, and the kernel may be constructed using the random Fourier features.

The coreset dataset may be selected uniformly between existing classes of the input query dataset.

The feature extraction may be performed using a backbone network shared across multiple classification tasks.

According to another aspect, there is provided a system comprising: a processor; a non-transitory computer readable medium communicatively coupled to the processor and having stored thereon computer program code that is executable by the processor and that, when executed by the processor, causes the processor to perform the method of any of the foregoing aspects or suitable combinations thereof.

The system may also comprise a memory communicatively coupled to the processor for storing the coreset dataset.

A non-transitory computer readable medium having stored thereon computer program code that is executable by a processor and that, when executed by the processor, causes the processor to perform the method of any of the foregoing aspects or suitable combinations thereof.

This summary does not necessarily describe the entire scope of all aspects. Other aspects, features and advantages will be apparent to those of ordinary skill in the art upon review of the following description of specific embodiments.

BRIEF DESCRIPTION OF THE DRAWINGS

In the accompanying drawings, which illustrate one or more example embodiments:

FIG. 1A is a block diagram of an example method for kernel continual learning during a training phase.

FIG. 1B is a block diagram of an example method of kernel continual learning during a testing phase.

FIG. 2 is a block diagram of an example computer system that may be used to perform kernel continual learning.

FIG. 3 is a block diagram providing an overview of kernel continual learning, according to an example embodiment.

FIGS. 4A-C are graphs depicting effectiveness of kernel continual learning across various tasks, according to various example embodiments.

FIGS. 5A-C are graphs depicting influence of number of tasks on accuracy of kernel continual learning, according to various example embodiments.

FIG. 6 is a graph of accuracy vs. coreset size illustrating the benefit of variational random features for kernel continual learning, according to an example embodiment.

FIG. 7 is a graph of accuracy vs. coreset size showing how enlarging the coreset size improves performance of kernel continual learning, according to an example embodiment.

FIG. 8 is a graph of accuracy vs. number of bases showing how increasing the number of random Fourier bases may improve performance of kernel continual learning, according to an example embodiment.

FIGS. 9A-C are graphs depicting influence of number of tasks on accuracy of kernel continual learning according to various example embodiments and in contrast to various conventional classifiers.

FIGS. 10A-C depict block diagrams of a system for kernel continual learning as applied to perform tasks on various datasets, according to additional example embodiments.

FIG. 11 is a block diagram of a system for kernel continual learning, according to another example embodiment.

DETAILED DESCRIPTION

Artificial intelligence agents are known to suffer from catastrophic forgetting when learning over non-stationary data distributions. Continual learning, also known as life-long learning, was introduced to deal with catastrophic forgetting. It refers to an agent able to continually learn to solve a sequence of non-stationary tasks by accommodating new information, while remaining able to complete past experienced tasks with minimal performance reduction. The fundamental challenge in continual learning is catastrophic forgetting, which is caused by the interference among tasks from heterogeneous data distributions.

Task interference is almost unavoidable when model parameters, like the feature extractor and the classifier, are shared by all tasks. At the same time, it is practically infeasible to keep separate sets of model parameters for each individual task when learning with an arbitrary long sequence of tasks. Moreover, knowledge tends to be more shared and transferred in the lower layers than higher layers across tasks in deep neural networks. This motivates non-parametric classifiers that automatically avoid task interference without sharing any parameters across tasks. Kernel methods provide a well-suited tool due to their non-parametric nature, which have proven to be a powerful technique in the machine learning toolbox. Kernels were shown to be effective in the scenarios of incremental and multi-task learning with support vector machines. Recently, they have also demonstrated to be strong learners in tandem with deep neural networks, especially when learning from limited data. Inspired by the success of kernels in machine learning, in at least some example embodiments herein, there are provided methods and systems to decouple the feature extractor from the classifier and introduce task-specific classifiers based on kernels for continual learning.

"Kernel continual learning" is used herein to deal with catastrophic forgetting in continual learning. Specifically, non-parametric classifiers are learned based on kernel ridge regression. To do so, an episodic memory is deployed to store a subset of samples from the training data per task, the "coreset dataset" (hereinafter simply referred to as the "coreset"), and to learn the classifier based on kernel ridge regression. Using kernels in this fashion may, in at least some embodiments, be beneficial for several reasons. The direct interference of classifiers is naturally avoided as kernels are established in a non-parametric way per task and no classifier parameters are shared across tasks. Moreover, in contrast to conventional memory replay methods, kernel continual learning does not need to replay data from previous tasks for training the current task, which averts task inference while enabling more efficient optimization. In order to achieve adaptive kernels per task, random Fourier features are used to learn kernels in a data-driven manner. To be more specific, kernel continual learning is formalized with random Fourier features as a variational inference problem, where the random Fourier basis is treated as a latent variable and inferred from the coreset of each task. The variational inference formulation naturally induces the regularization term that encourages the model to learn adaptive kernels per task from the coreset only. Consequently, a more compact memory is achieved, which alleviates the storage overhead.

The technical problem solved by at least some embodiments of kernel continual learning herein is catastrophic forgetting in classifiers due to task interference. In continual learning for visual object recognition tasks, the classifier parameters of different tasks are interfered along learning process, causing forgetting knowledge of previous tasks. At least some embodiments of kernel continual learning herein are directed at non-parametric classifiers based on kernels. No classifier parameters are shared among tasks, therefore avoiding interference in classifiers. This enables kernel continual learning to continually solve recognition tasks while being able to solve previously learned tasks without significant performance drop.

As described further below, experiments in accordance with at least some embodiments are performed on four benchmark datasets: Rotated MNIST, Permuted MNIST, Split CIFAR100 and miniImageNet. The results demonstrate the effectiveness of kernel continual learning.

Conventional Techniques for Address Catastrophic Forgetting

Conventional methods differ in the way they deal with catastrophic forgetting, which are briefly reviewed below in terms of regularization, dynamic architectures and experience replay.

Regularization methods determine the importance of each model's parameter per task, which prevents the parameters from being updated for new tasks. For example, each weight's performance may be specified with the Fisher information matrix. Alternatively, parameter importance may be determined by gradient magnitude. These methods can be explored from the lens of Bayesian optimization. For instance, a regularization technique, inspired by variational inference, may be used to protect against forgetting. Bayesian or not, regularization methods address catastrophic forgetting by adding a regularization term to the main loss function. The penalty term proposed in such methods are unable to prevent drift in the loss landscape of previous tasks. While alleviating forgetting, the penalty also prevents the plasticity to absorb new information from future tasks learned over a long timescale.

Dynamic architectures allocate a subset of the model parameters per task. This is achieved by a gating mechanism, or by incrementally adding new parameters to the model. Incrementally learning and pruning is another possibility. Given an over-parameterized model with the ability to learn quite a few tasks, model expansion can also be achieved by pruning the parameters not contributing to the performance of the current task, while keeping them available for future tasks. These methods are preferred when there is no memory usage constraint and the final model performance is prioritized. They offer an effective way to avoid task interference and catastrophic forgetting, at the expense of suffering from potentially unbounded model expansions and preventing positive knowledge transfer across tasks.

Experience replay methods assume it is possible to access data from previous tasks by having a fixed-size memory or a generative model able to produces samples from old tasks. A model may be augmented with fixed-size memory, which accumulates samples in the proximity of each class center. Alternatively, another memory-based model may be implemented by exploiting a reservoir sampling strategy in the raw input data selection phase. Rather than storing the original samples, certain other models accumulate the parameter gradients during task learning. Certain other models incorporate a generative model into a continual learning model to alleviate catastrophic forgetting by producing samples from previous tasks and retraining the model using data from previous tasks and the current task. These methods assume an extra neural network, such as a generative model or a memory is available. Otherwise, they cannot be exploited. Those replay-based methods benefit from a memory to retrain their model over previous tasks. In contrast, in at least some example embodiments, kernel continual learning only uses memory to store data as a task identifier proxy at *inference time* without the need of replay for training, which mitigates optimization cost in memory based methods.

Kernel Continual Learning

In a traditional supervised learning setting, a model or agent $f$ is learned to map input data from the input space to its target in the corresponding output space: $X \mapsto y$, where samples $X \in \mathcal{X}$ are assumed to be drawn from the same data distribution. In case of an image classification problem, $X$ are the images and $Y$ are associated class labels. Instead of solving a single task, continual learning aims to solve a sequence of different tasks, $T_1$, $T_2$, $T_n$, from non-stationary data distributions, where $n$ stands for the number of tasks, and each task is an individual classification problem. A continual learner is required to continually solve each $t$ of those tasks once being trained on its labeled data, while remaining able to solve previous tasks with no or limited access to their data.

Generally, a continual learning model based on a neural network can be regarded as a feature extractor $h_\theta$ and a classifier $f_c$. The feature extractor is a convolutional architecture before the last fully-connected layer that is shared across tasks. The classifier is the last fully-connected layer. In at least some embodiments herein, a task-specific, non-parametric classifier is implemented based on kernel ridge regression.

The model is trained on the current task t. Given its training data $D_t$, a subset of data is uniformly chosen between existing classes in current task $t$, which is called the *"coreset"* and denoted as: $\mathcal{C}_t = (\mathbf{x}_i, \mathbf{y}_i)_{i=1}^{N_c}$. The classifier $f_c$ is constructed based on kernel ridge regression on the coreset. Assuming classifier with weight $\mathbf{w}$, the loss function of kernel ridge regression takes the following form:

$$\mathcal{L}_{\mathrm{krr}}(\mathbf{w}) = \frac{1}{2}\sum_i (\mathbf{y}_i - \mathbf{w}^\top \psi(\mathbf{x}_i)) + \frac{1}{2}\lambda||\mathbf{w}||^2, \qquad (1)$$

where A is the weight decay parameter. Based on the Representer theorem:

$$\mathbf{w} = f_c^{\alpha^t}(\cdot) = \sum_{i=1}^{N_c} \alpha_i k(\cdot, \psi(\mathbf{x}_i)), \qquad (2)$$

where $k(\cdot,\cdot)$ is the kernel function. Then $\alpha$ can be calculated in a closed form:

$$\alpha^t = Y(\lambda I + \mathcal{K})^{-1}, \qquad (3)$$

where $\alpha^t = [\alpha_1, \cdots, \alpha_i, \cdots, \alpha_{N_C}]$ and $\lambda$ is considered to be a learnable hyper-parameter. The $\mathcal{K} \in R^{N_c \times N_c}$ matrix for each task is computed as $k(\mathbf{x}_i, \mathbf{x}_j) = \psi(\mathbf{x}_i)\psi(\mathbf{x}_j)^\top$. Here $\psi(\mathbf{x}_i)$ is the feature map of $\mathbf{x}_i \in \mathcal{C}_t$, which can be obtained from the feature extractor $h_\theta$.

To jointly learn the feature extractor $h_\theta$ the total loss function is minimized over samples from the remaining set:

$$\sum_{(\mathbf{x}\prime,\mathbf{y}\prime)\in D_t \backslash \mathcal{C}_t} \mathcal{L}(f_c^{\alpha^t}(\psi(\mathbf{x}')), \mathbf{y}'). \qquad (4)$$

Here: $\mathcal{L}(\cdot)$ is the cross-entropy loss function and the predicted output $\tilde{\mathbf{y}}'$ is computed by

$$\tilde{\mathbf{y}}' = f_c^{\alpha^t}(\psi(\mathbf{x}')) = Softmax(\alpha\tilde{K}), \qquad (5)$$

where $\tilde{K} = \psi(X)\psi(\mathbf{x}')^\top$, $\psi(X)$ denotes the feature maps of samples in the coreset, and $Softmax(\cdot)$ is the sofmax function applied to the output of kernel ridge regression.

Any semi-positive definite kernel, e.g., a radial basis function (RBF) kernel or a dot product linear kernel, may be used to construct the classifier. In at least some example embodiments, random Fourier features are introduced to train data-driven kernels, which have previously demonstrated success in regular learning tasks. Data-driven kernels by random Fourier features provide an appealing technique to train strong classifiers with a relatively small memory footprint for continual learning based on episodic memory.

One of the ingredients when finding a mapping function in non-parametric approaches, such as kernel-ridge regression, is the kernel function. Translation-invariant kernels may be approximated using explicit feature maps, this approach is underpinned by Bochner's theorem, in which a continuous, real valued, symmetric and shift-invariant function $k(\boldsymbol{x}, \boldsymbol{x}') = k(\boldsymbol{x} - \boldsymbol{x}')$ on $\mathbb{R}^d$ is a positive definite kernel if and only if it is the Fourier transform $p(w)$ of a positive finite measure such that:

$$\mathrm{k}(\mathbf{x}, \mathbf{x}') = \int_{\mathbb{R}^d} e^{i\omega^{\mathsf{T}}(\mathbf{x}-\mathbf{x}')} dp(\boldsymbol{\omega}) = \mathbb{E}_\omega[\zeta_\omega(\mathbf{x})\zeta_\omega(\mathbf{x}')^*] \tag{6}$$

where $\zeta_w(\mathbf{x}) = e^{i\omega^{\mathsf{T}}\mathsf{x}}$.

With a sufficient number of samples $\omega$ drawn from $p(\omega)$, an unbiased estimation of $\mathrm{k}(\mathbf{x}, \mathbf{x}')$ is $\zeta_w(\mathbf{x})\zeta_w(\mathbf{x})^*$.

Based on Eq. (6), $D$ sets of samples are drawn: $\{\omega_i\}_{i=1}^D$ and $\{b_i\}_{i=1}^D$ from a normal distribution and uniform distribution (with a range of $[0, 2\pi]$), respectively, and the random Fourier features (RFFs) are constructed for each data point x using the formula:

$$\psi(\mathbf{x}) = \frac{1}{\sqrt{D}}[\cos(\boldsymbol{\omega}_1^{\mathsf{T}}\mathbf{x} + b_1), \cdots, \cos(\boldsymbol{\omega}_D^{\mathsf{T}}\mathbf{x} + b_D)]. \tag{7}$$

Having the random Fourier features, the kernel matrix is determined as $\mathrm{k}(\mathbf{x}, \mathbf{x}') = \psi(\mathbf{x})\psi(\mathbf{x}')^{\mathsf{T}}$.

Traditionally the shift-invariant kernel is constructed based on random Fourier features, where the Fourier basis is drawn from a Gaussian distribution transformed from a pre-defined kernel. This results in kernels that are agnostic to the task. In continual learning, however, tasks are provided sequentially from non-stationary data distributions, which makes it sub-optimal to share the same kernel function across tasks. To address this problem, task-specific kernels are trained in a data-driven manner. This is suitable for continual learning as it is desirable to train informative kernels by using a coreset of a minimum size. This is formulated as a variational inference problem, where the random basis $\omega$ is treated as latent variable.

From a probabilistic perspective, it is desirable to maximize the following conditional predictive log-likelihood for the current task $t$:

$$\max_p \sum_{(\mathbf{x},\mathbf{y})\in\mathcal{D}_t\backslash\mathcal{C}_t} \ln p(\mathbf{y}|\mathbf{x}, \mathcal{D}_t\backslash\mathcal{C}_t), \tag{8}$$

which amounts to making maximally accurate predictions on $\mathbf{x}$ based on $\mathcal{D}_t\backslash\mathcal{C}_t$.

Introducing the random Fourier base $\omega$ in Eq. (8) that is treated as a latent variable, results in:

$$\max_p \sum_{(\mathbf{x},\mathbf{y})\in\mathcal{D}_t\backslash\mathcal{C}_t} \ln \int p(\mathbf{y}|\mathbf{x}, \omega, \mathcal{D}_t\backslash\mathcal{C}_t)p_\gamma(\omega|\mathcal{D}_t\backslash\mathcal{C}_t)d\omega. \tag{9}$$

Data is used to infer the distribution over the latent variable $\omega$ whose prior is conditioned on the data. The data and $\omega$ are combined to generate kernels to classify $\mathbf{x}$ based on kernel ridge regression. An uninformative prior of a standard Gaussian distribution can be placed over the latent variable $\omega$, as described further below in respect of the experiments.

It is intractable to directly solve for the true posterior $p(\omega|\mathbf{x}, \mathbf{y}, \mathcal{D}_t\backslash\mathcal{C}_t)$ over $\omega$; therefore a variational posterior $q_\phi(\omega|\mathcal{C}_t)$ is introduced and conditioned solely on the coreset $\mathcal{C}_t$ because the coreset will be stored as episodic memory for the inference of each corresponding task.

By incorporating the variational posterior into Eq. (9) and applying Jensen's inequality, the evidence lower bound (ELBO) is established as follows:

$$
\begin{aligned}
\ln p(\mathbf{y}|\mathbf{x}, \mathcal{D}_t \backslash \mathcal{C}_t) \quad &\geq \mathbb{E}_{q_\phi(\omega|\mathcal{C}_t)}[\ln p(\mathbf{y}|\mathbf{x}, \boldsymbol{\omega}, \mathcal{D}_t \backslash \mathcal{C}_t)] \\
&- D_{\mathrm{KL}}[q_\phi(\boldsymbol{\omega}|\mathcal{C}_t) \parallel p_\gamma(\boldsymbol{\omega}|\mathcal{D}_t \backslash \mathcal{C}_t)] \\
&= \mathcal{L}_{\mathrm{ELBO}}.
\end{aligned}
\tag{10}
$$

Therefore, maximizing the ELBO amounts to maximizing the conditional log-likelihood in Eq. (8).

In the continual learning setting, the model is able to make predictions based solely on the coreset $\mathcal{C}_t$ that is stored in memory. That is, the conditional log-likelihood is conditioned on the coreset only. Based on the ELBO in Eq. (10) the following empirical objective function is established that is minimized by the overall training procedure:

$$
\begin{aligned}
\tilde{\mathcal{L}}_{\mathrm{ELBO}} \quad &= \frac{1}{T}\sum_{t=1}^{T}\Big[\sum_{(\mathbf{x},\mathbf{y})\in\mathcal{D}_t\backslash\mathcal{C}_t} \frac{1}{L}\sum_{\ell=1}^{L}[\ln p(\mathbf{y}|\mathbf{x}, \boldsymbol{\omega}^{(\ell)}, \mathcal{C}_t)] \\
&- D_{\mathrm{KL}}[q_\phi(\boldsymbol{\omega}|\mathcal{C}_t) \parallel p_\gamma(\boldsymbol{\omega}|\mathcal{D}_t\backslash\mathcal{C}_t)]\Big],
\end{aligned}
\tag{11}
$$

where in the first term, the Monte Carlo method is used to draw samples from the variational posterior $q(\omega|\mathcal{C}_t)$ to estimate the log-likelihood, and $L$ is the number of Monte Carlo samples. In the second term, the conditional prior serves as a regularizer that ensures the inferred random Fourier basis should always be relevant to the current task. Minimizing the KL divergence enforces the distribution of random Fourier bases, as inferred from the coreset, to be close to the one from the training set. Moreover, the KL term enables generation of informative kernels adapted to each task by using a relatively small memory.

In practice, the conditional distributions $q_\phi(\omega|C_t)$ and $p_\gamma(\omega|\mathcal{D}_t\backslash\mathcal{C}_t)$ are assumed to be Gaussian and may be implemented by using the amortization technique. That is, multiple-layer perceptrons are used to generate the distribution parameters, $\mu$ and $\sigma$, by taking the conditions as input. In experiments, two separate amortization networks are deployed, referred to as the inference network $f_\phi$ for the variational posterior and the prior network $f_\gamma$ for the prior. In addition, to demonstrate the effectiveness of data-driven kernels, a variant of variational random features is implemented by replacing the conditional prior in Eq. (11) with an uninformative one, i.e., an isotropic Gaussian distribution $\mathcal{N}(0, I)$. In this case, kernels are also learned in a data-driven way from the coreset without being regulated by the training data from the task.

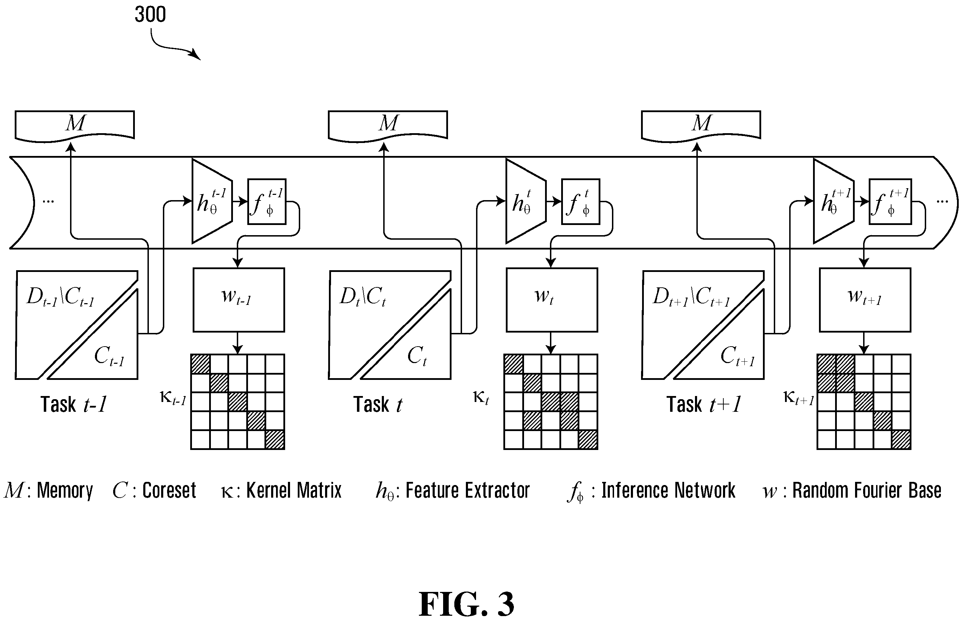

FIG. 3 is a graphical depiction of an example of kernel continual learning with variational random features annotated with the above-described notation. For each task $t$, the coreset $C_t$ is used to infer the random Fourier base, which generates kernel matrix $\mathcal{K}_t$. The classifier for this task is constructed based on kernel ridge regression using $\mathcal{K}_t$. $h_\theta$ denotes the feature extraction network, parameterized by $\theta$, which is shared and updated during training on the task sequence. $f_\phi$ is the inference network, parameterized with $\phi$ for random Fourier bases, which is also shared across tasks and updated across learning. Memory $\mathcal{M}$ stores the coreset from each task and is used for inference only. $h_\theta$ and $f_\phi$ are jointly learned end-to-end.

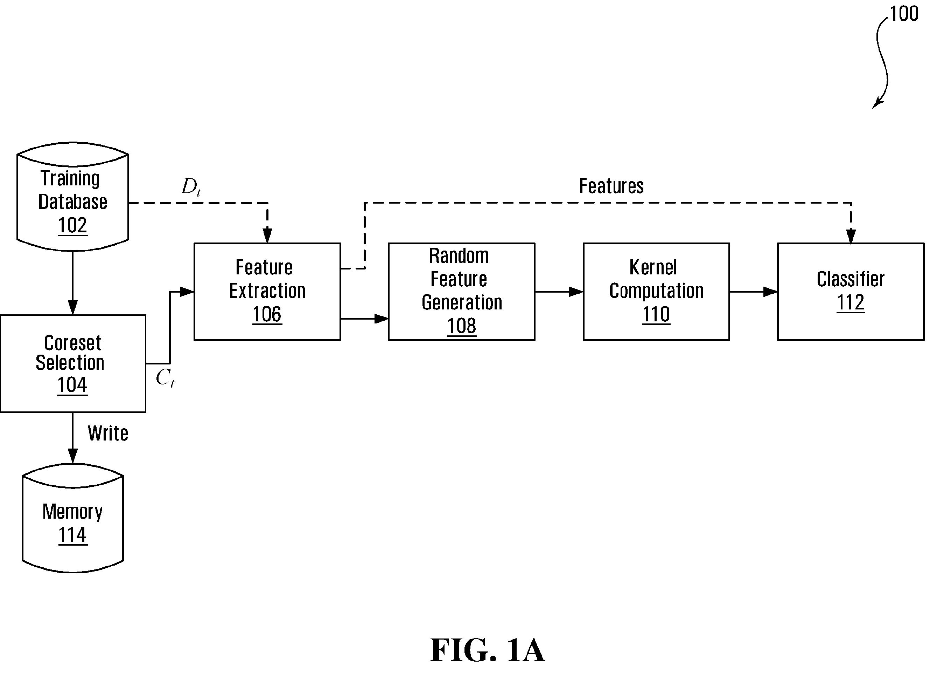

Referring now to FIG. 1A, there is shown a block diagram of an example method 100 for kernel continual learning during a training phase. The method 100 makes use of a training database 102, which stores a sequence of $n$ tasks $(T_1, T_2, ..., T_n)$, with each task having a corresponding dataset $(D_1, D_2, ..., D_n)$. Each dataset may comprise any suitable type of data, such as image data containing images for classification. The method 100 processes the tasks sequentially, with each task being processed once as follows.

The method 100 selects a representative task at block 104. More particularly, at block 104, a subset of one of the datasets, $D_t$, obtained from the training database 102, is randomly and uniformly chosen. This subset of $D_t$ is stored in memory 114 for subsequent use at inference time and is excluded from $Dt$, which resulting dataset is denoted as $D_t \backslash C_t$ herein. This subset of the dataset $D_t$ is the coreset, $C_t$.

After selecting the coreset, the method 100 comprises performing feature extraction at block 106 on the coreset $C_t$ and dataset $D_t \backslash C_t$ to respectively map features from the coreset $C_t$ and dataset $D_t \backslash C_t$ to a feature space. An artificial neural network, such as a convolutional neural network or multilayer perceptron, may be used to perform this feature extraction.

Extracted features are mapped to the Hilbert space at block 108. Advantageously and in at least some implementations, mapping features from a cartesian space to a Hilbert space allows computing a kernel for a task in a more efficient manner. Also at block 108, using the features extracted from the coreset $C_t$ at block 106, random Fourier features are computed. At block 110, using the random Fourier features determined at block 108 over $C_t$, a task specific kernel is determined. And, at block 112, the features determined over $D_t \backslash C_t$ at block 106 are classified and their corresponding labels are predicted. By having the predicted label and ground truth, the performance of the method is evaluated and penalized accordingly. After label prediction, the predicted label is compared with the ground truth and the cross-entropy loss function is determined. By backpropagating the loss and error, the feature extractor used at block 106 and/or the random feature generation performed at block 108 may be improved and ideally optimized. Thus, at a high level and in some implementations, the training phase includes receiving a task data set regarding the current task; representing the current task with the task data set using a representative data set which is a subset of data from the task dataset (coreset dataset); extracting features representative and using the features extracted to perform random feature generation for generating the random features for computing the kernel (based on the features generated) to construct a classifier. Notably, for each task observed, a kernel is computed to represent each task and may be reviewed in the Hilbert space.

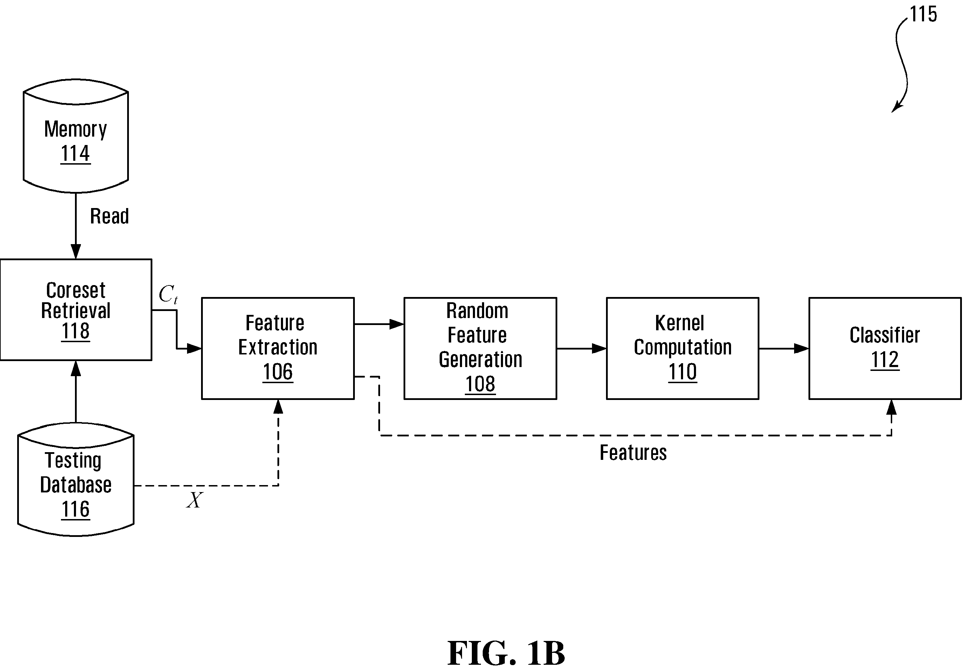

Referring now to FIG. 1B, there is shown a block diagram of an example method 115 for kernel continual learning during a testing (or inference) phase. As noted, when a representative task is selected, it may be stored in a memory for use in the testing or inference stage. A testing database 116 in FIG. 1B stores input query images X and the corresponding task ID (more generally, classification may be performed on an input query dataset of which the input query images are an example). By knowing the task ID, at block 118 the coreset $C_t$ that corresponds to the task ID is retrieved from the memory 114. Analogous to FIG. 1A, feature extraction on the coreset $C_t$ and on the input query images X are performed at block 106. At block 108, using features extracted from the coreset $C_t$ at block 106, random Fourier features are determined. At block 110, for the current queried task, the random Fourier features estimated at block 108 over the coreset $C_t$ are used to construct a task specific kernel. Then, at block 112, the features determined over the input query images X at block 106 are classified using the kernel determined at block 110 and their corresponding labels are predicted. In at least some embodiments, the combination of the method 100 and 115, avoids catastrophic forgetting by storing coresets from each tasks (including storing a coreset or subset of samples from the previous task), whereby the coreset can be used to generate the classifier, such that the coreset from the previous task is used in the training of the current task, thereby not forgetting prior learned knowledge.

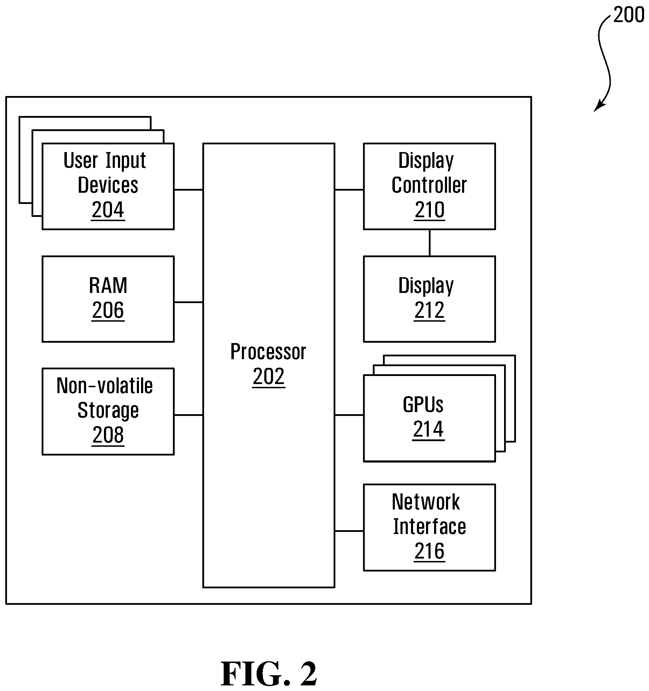

Referring now to FIG. 2, there is shown a block diagram of an example computer system 200 that can be used to perform a method of kernel continual learning, as described above (e.g. with reference to methods 100 and 115 in FIGS. 1A and 1B). The computer system 200 comprises a processor 202 that controls the system's 200 overall operation. The processor 202 is communicatively coupled to and controls subsystems comprising user input devices 204, which may comprise any one or more user input devices such as a keyboard, mouse, touch screen, and microphone; random access memory ("RAM") 206, which stores computer program code that is executed at runtime by the processor 202; non-volatile storage 208 (e.g., a solid state drive or magnetic spinning drive), which stores the computer program code loaded into the RAM 404 for execution at runtime and other data; a display controller 210, which may be communicatively coupled to and control a display 212; graphical processing units ("GPUs") 214, used for parallelized processing as is not uncommon in vision processing tasks and related artificial intelligence operations; and a network interface 216, which facilitates network communications with a network and other devices that may be connected thereto (not shown). Any one or more of the methods for kernel continuing learning as described herein, such as those depicted in FIGS. 1A and 1B, may be implemented as computer program code and stored in the non-volatile storage 208 for loading into the RAM 206 and execution by the processor 202, thereby causing the system 200 to perform classification using kernel continuing learning. Notably, in at least some embodiments the system may provide a non parametric classifier based on kernels such as to reduce likelihood of forgetting by storing a subset of data (coreset) from prior tasks and learning therefrom for training the current tasks.

Experiments

Experiments are conducted on four benchmark datasets for continual learning. Ablation studies are performed to demonstrate the effectiveness of kernels for continual learning as well as the benefit of variational random features in learning data-driven kernels. Four different datasets are used: Permuted MNIST, Rotated MNIST, Split CIFAR100, and Split miniImageNet.

Permuted MNIST: Following Kirkpatrick, J., Pascanu, R., Rabinowitz, N., Veness, J., Desjardins, G., Rusu, A.

A., Milan, J., Quan, J., Ramalho, T., Grabska-Barwinska, A., et al., Overcoming catastrophic forgetting in neural networks, Proceedings of the national academy of sciences, 114(13):3521-3526, 2017, 20 different MNIST datasets are generated. Each dataset is created by a special pixel permutation of the input images, without changing their corresponding labels. Each dataset has its own permutation by owning a random seed.

Rotated MNIST: Similar to Permuted MNIST, Rotated MNIST has 20 tasks as in Mirzadeh, S. I., Farajtabar, M., Pascanu, R., and Ghasemzadeh, H., Understanding the role of training regimes in continual learning, arXiv preprint arXiv:2006.06958, 2020. Each task's dataset is a specific random rotation of the original MNIST dataset (e.g., task 1, task 3, and task 3 are the main MNIST dataset, 10 degree rotation, and 20 degree rotation, respectively). Each task's dataset is accordingly a ten degree rotation of the previous task's dataset.

Split CIFAR100: As described in Zenke, F., Poole, B., and Ganguli, S., Continual learning through synaptic intelligence, Proceedings of machine learning research, 70:3987, 2017b, this benchmark is generated by dividing the CIFAR100 dataset into 20 sections. Each section represents 5 our of 100 labels (without replacement) from CIFAR100. Hence, it contains 20 tasks and each task is a 5-way classification problem.

Split miniImageNet: Similar to Split CIFAR100, the miniImageNet benchmark as described in Vinyals, O., Blundell, C., Lillicrap, T., Kavukcuoglu, K., and Wierstra, D., Matching Networks for One Shot Learning, arXiv: 1606.04080v2 [cs.LG], 2017 contains 100 classes, a subset of the original ImageNet dataset in Russkovsky, O., Deng, J., Su, H., Krause, J., Satheesh, S., Ma, S., Huang, Z., Karpathy, A., Khosla, A., Bernstein, M., Berg, A., and Fei-Fei, L., ImageNet Large Scale Visual Recognition Challenge, arXiv:1409.0575v3 [cs.CV]. It has 20 disjoint tasks, and in each task there exists 5 classes.

The "average accuracy" and "average forgetting" metrics are used to evaluate performance, as described below.

Average Accuracy: This score shows the model accuracy after training t consecutive tasks are finished. That is:

$$A_t = \frac{1}{t} \sum_{i=1}^{t} a_{t,i}, \qquad (12)$$

where $a_{t,i}$ refers to model performance on task $i$ after it is being trained on task $t$.

Average Forgetting: This metric measures the decline in accuracy per task between their highest accuracy and the final accuracy reached after model training is finished.

$$F = \frac{1}{T-1} \sum_{i=1}^{T-1} \max_{1,...,T-1}(a_{t,i} - a_{T,i}). \qquad (13)$$

Taken together, the two metrics allow the assessment of how well a continual learner achieves its classification target while overcoming forgetting.

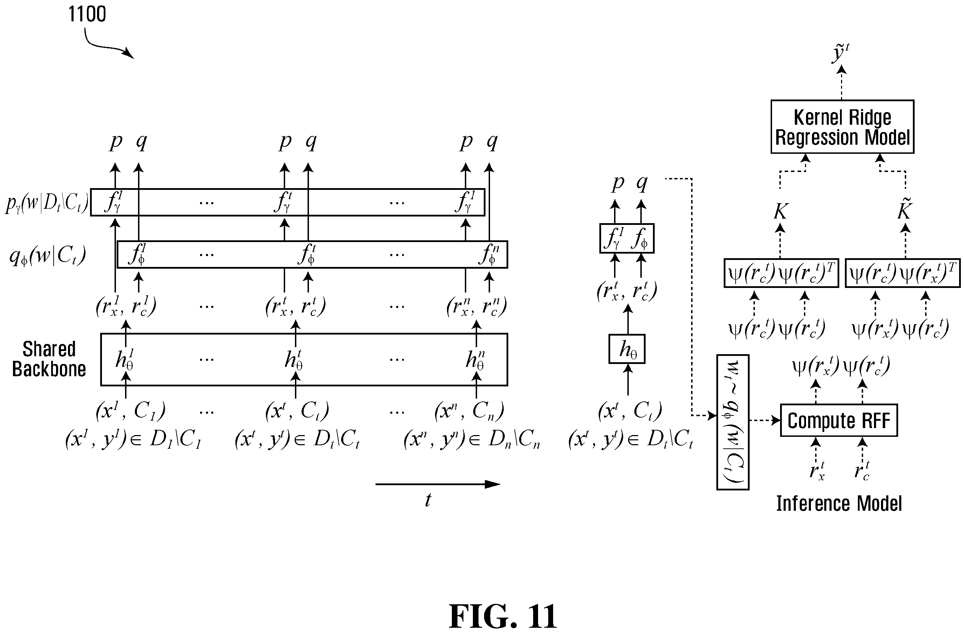

In at least some example embodiments, the system for kernel continual learning comprises three networks: a shared backbone $h_\theta$, a posterior network $f_\phi$, and a prior network $f_\gamma$. An overview of the system 1100 for kernel continual learning is depicted in FIG. 11. In FIG. 11, $h_\theta$ is the backbone network shared across different tasks to extract general features. $f_\phi$ and $f_\gamma$ are two amortized networks to estimate the posterior and prior distributions over $\omega$. $q$ and $p$ refer to posterior and prior distributions. $r_x$ are features extracted over samples drawn from $D \backslash C$. These features are l2-normalized as well as average pooled over samples in the batch.

On the left of FIG. 11, the posterior and the priors generated in the sequence of tasks are shown. On the right, the inference model is depicted. To predict a label for a given query sample, first, the input images and their corresponding coreset are forwarded through $h_\theta$ and their features are computed: $r_x^t$ and $r_c^t$. Next, $r_c^t$ is fed through $f_\phi$ and the posterior distribution over $q_\phi(\omega | C_t)$ is estimated. Then, the random Fourier bases $\omega_t$ are created by drawing samples from estimated posterior distribution. Having random bases for the current task $t$, $\omega_t$ as well as $r_x^t$ and $r_c^t$, random Fourier features related the query input $\psi(r_x^t)$ and coreset $\psi(r_c^t)$ are estimated. Each kernel, $K$ and $\tilde{K}$, is estimated using its corresponding random Fourier features and $k(\mathbf{x}, \mathbf{x}') = \psi(\mathbf{x})\psi(\mathbf{x}')^{\mathsf{T}}$. Based on Eq. (5), these two estimated kernels are used to predict the output labels for given query samples.

In at least some embodiments, the system 1100 of FIG. 11 may be varied by removing the prior network and setting the prior to a standard Gaussian distribution. In still other embodiments, by using linear, polynomial, and radial basis function kernels, neither the prior network nor the posterior network is used.

For the Permuted MNIST and Rotated MNIST benchmarks, $h_\theta$ contains only two-hidden layers that each have 256 neurons, followed by a ReLU activation function. For Split CIFAR100, a ResNet18 architecture similar to Mirzadeh, S. I., Farajtabar, M., Pascanu, R., and Ghasemzadeh, H., Understanding the role of training regimes in continual learning, arXiv preprint arXiv:2006.06958, 2020 is used, and for miniImageNet, a ResNet18 architecture similar to Chaudry, A., Khan, N., Dokania, P., and Torr, P. H. S., Continual Learning in Low-rank Orthogonal Subspaces, arXiv:2010.11635v2 [cs.LG] is used. With regard to the $f_\gamma$ and $f_\phi$ networks, three-hidden layers followed by an ELU activation function are used. The number of neurons in each layer depends on the benchmark. On Permuted MNIST and Rotated MNIST, there are 256 neurons per layer, and 160 and 512 are used for Split CIFAR100 and miniImageNet, respectively. To make fair comparisons, the model is trained for only *one* epoch per task, namely, each sample in the dataset is observed only once, and the batch size is assigned to be 10. Other optimization techniques such as weight-decay, learning rate decay and dropout are set to the same values as in Mirzadeh, S. I., Farajtabar, M., Pascanu, R., and Ghasemzadeh, H., Understanding the role of training regimes in continual learning, arXiv preprint arXiv:2006. 06958, 2020. The model is implemented in Pytorch.

To demonstrate the effectiveness of kernels for continual learning, classifiers based on kernel ridge regression using commonly-used linear, polynomial, radial basis function (RBF) kernels, and the above-described variational random Fourier features are established. Results are reported on Split CIFAR100, where 5 different random seeds are sampled. For each random seed, the model is trained over different kernels. Finally, the result for each kernel is estimated by averaging over their corresponding random seeds. For fair comparison, all kernels are computed using the same coreset of size 20.

The results are shown in Table 1, below. All kernels perform well: the radial basis function (RBF) obtains a modest average accuracy in comparison to other basic kernels such as the linear and polynomials kernels. The linear and polynomial kernels perform similarly. The kernels obtained from variational random features (VRF) achieve the best performance in comparison to other kernels, and they work better than its uninformative counterpart. This emphasizes that the prior incorporated in VRF is more informative because its prior is data-driven.

*Table 1:* Effectiveness of kernels on Split CIFAR100. All kernels perform well and the simple linear kernel performs better the RBF kernel. The adaptive kernels based on the random Fourier features achieve the best performance, indicating the advantage of data-driven kernels.

| Kernel | Split CIFAR100 | |
|---|---|---|
| | Accuracy | Forgetting |
| RBF | 56.86 ± 1.67 | 0.03 ± 0.008 |
| Linear | 60.88 ± 0.64 | 0.05 ± 0.007 |
| Polynomial | 60.96 ± 1.19 | 0.03 ± 0.004 |
| VRF (uninformative prior) | 62.46 ± 0.93 | 0.05 ± 0.004 |
| VRF | 62.70 ± 0.89 | 0.06 ± 0.008 |

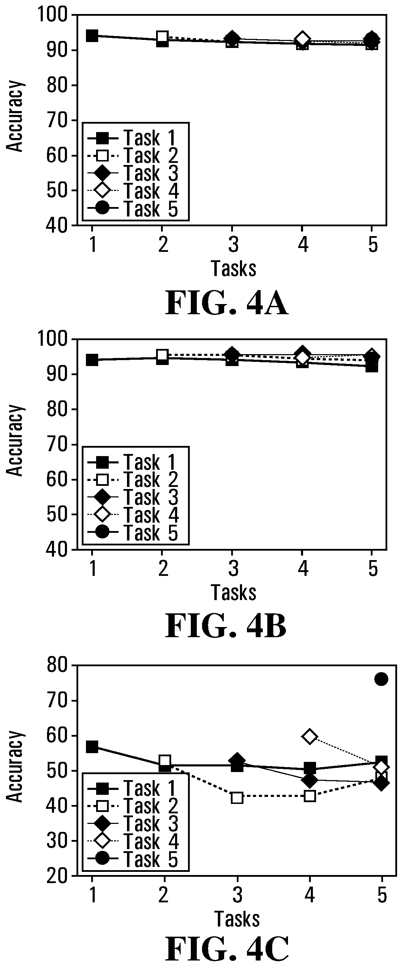

Regarding VRF, FIGS. 4A-C respectively demonstrate the change of each task's accuracy on Permuted MNIST, Rotated MNIST and Split CIFAR100. The classifiers based on those kernels are non-parametric, which systematically avoids task interference in classifiers. Thanks to the non-parametric nature of the classifier based on kernels, the method according to at least some example embodiments is flexible and able to naturally deal with a more challenging setting with a different numbers of classes (referred to as "varied ways"). To show this, experiments with a varying numbers of classes in each task using variational random features are conducted. The results on Split CIFAR100 and Split miniIMageNet are shown in Table 2. Kernel continual learning results in slightly lower accuracy on Split CIFAR100, and leads to an improvement over the traditional fixed ways evaluation on Split miniImageNet.

*Table 2:* Effectiveness of VRF kernel in variable-way scenario on Split CIFAR100 and Split miniImageNet. In this scenario, instead of covering a fixed number of 5 classes per task in Split CIFAR100 and Split miniImageNet benchmarks, a task is able to cover more flexible number of classes in range [3,15]. By doing so, the experimental setting looks more realistic. Even in this case, our proposed method is effective, in miniImageNet benchmarks, the model performance is improved.

| | Split CIFAR100 | | Split miniImageNet | |
|---|---|---|---|---|
| | Accuracy | Forgetting | Accuracy | Forgetting |
| Fixed Ways | 64.02 | 0.05 | 51.89 | 0.06 |
| Varied Ways | 61.00± 1.80 | 0.05±0.01 | 53.90±2.95 | 0.05±0.01 |

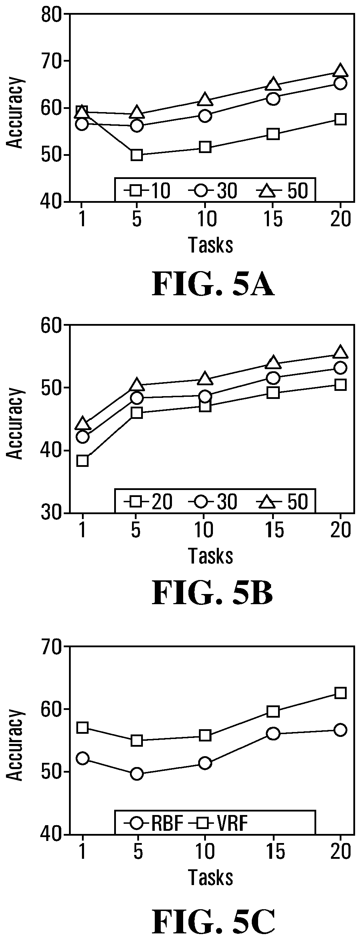

FIGS. 5A-C depict the average accuracy of kernel continual learning by variational random features for 20 tasks for three different coreset sizes are illustrated on Split CIFAR100 (FIG. 5A) and Split miniImageNet (FIG. 5B) benchmarks. Moreover, in FIG. 5C the average accuracy of two VRF and RBF kernels (RBF vs. VRF on Split CIFAR100) is shown. As shown in all figures, in at least some embodiments the method and system for kernel continual learning is improved by observing more tasks and in some embodiments, learning from prior tasks by incorporating coresets from the previous tasks into the training of the current tasks.

More particularly, the robustness of kernel continual learning when the number of tasks increases is considered in FIGS. 5A-C. Results for three different coreset sizes on Split CIFAR100 and Split miniImageNet are shown in FIGS. 5A and 5B, respectively. FIGS. 5A and 5B evidence that kernel continual learning achieves better and better performance as the number of tasks increases, indicating knowledge is transferred forward from previous tasks to future tasks. The observed positive transfer is likely due to the shared parameters in the feature extractors and amortization networks, as they allow knowledge to be transferred across tasks. A comparison between variational random features and a predefined RBF kernel is shown in FIG. 5C. The performance for variational random features increases faster than the RBF kernel with observing more tasks. This may be due to the shared amortization network among tasks, which enables knowledge to be transferred across tasks as well, indicating the benefit of learning data-driven kernels by variational random features.

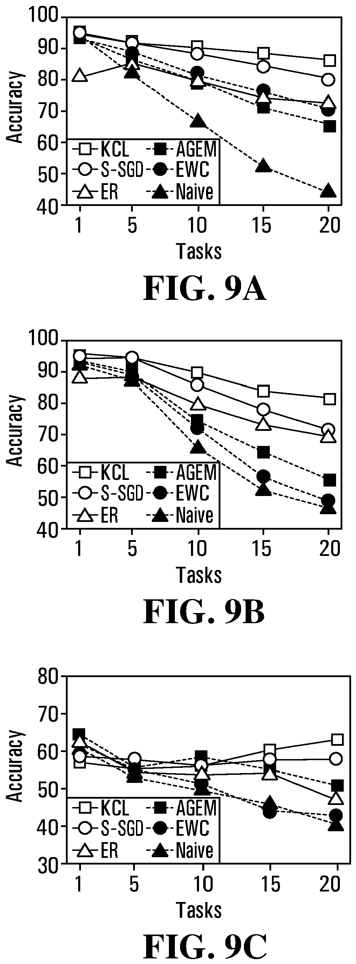

FIGS. 9A-C respectively compare, for Permuted MNIST, Rotated MNIST, and Split CIFAR100, kernel continual learning according to at least some embodiments herein to various conventional methods by variational random features over 20 consecutive tasks in terms of average accuracy. Kernel continual learning consistently performs better than other methods with less accuracy drop on Rotated and Permuted MNIST and the performance even starts to increase when observing more tasks on the challenging Split CIFAR100 dataset.

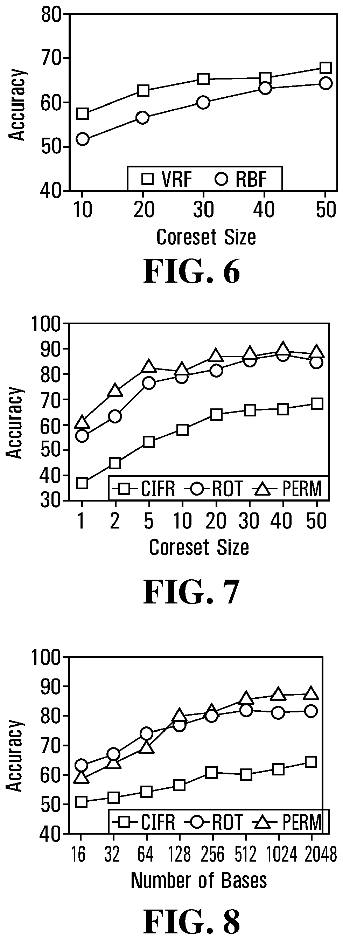

To further demonstrate the memory benefit of data-driven kernel learning, variational random features with a predefined RBF kernel in FIG. 6. FIG. 6 shows that to achieve similar performance, variational random features need a smaller coreset size compared to RBF kernels, showing the benefit of variational random features for kernel continual learning. Five different coreset sizes are considered. Variational random features exceed the RBF kernel consistently. With a smaller coreset of 20, variational random features can achieve similar performance as the RBF kernel with a larger coreset of 40. This demonstrates that learning task-specific kernels in a data driven way enables use of a smaller memory than with a pre-defined kernel.

Since kernel continual learning does not need to replay and only uses memory for inference, the coreset size plays a crucial role. Its influence is therefore ablates on Rotated MNIST, Permuted MNIST, and Split CIFAR100 by varying the coreset sizes with 1, 2, 5, 10, 20, 30, 40, and 50. Here, the number of random bases is set to be 1024 for Rotated MNIST and Permuted MNIST, and 2048 for Split CIFAR100. The results in FIG. 7 show that by increasing the coreset size from 1 to 5 results in a steep accuracy increase for all datasets, and this continues depending on the difficulty of the dataset. For Split CIFAR100 results start to saturate after a coreset size of 20. This is expected as increasing the number of samples in a coreset allows the random Fourier bases to be better inferred with more data from the task, therefore resulting in more representational and descriptive kernels. In the remaining experiments a coreset size of 20 for Rotated MNIST, Permuted MNIST and Split CIFAR100, and a coreset size of 30 for miniImageNet are used. The effect of the coreset size is ablated on time complexity in Table 3. Indeed, it shows that increasing the coreset size only comes with a limited cost increase at inference time.

*Table 3*

| | 5 | 10 | 20 | 40 |
|---|---|---|---|---|
| Time (s) | 0.0017 | 0.0017 | 0.0017 | 0.0018 |

When approximating VRF kernels the number of random Fourier bases is a hyperparameter. In principle, a larger number of random Fourier bases achieves better approximation of kernels, leading to better classification accuracy. Here its effect on the continual learning accuracy is investigated. Results with different numbers of bases are shown in FIG. 8 on RotatedMNIST, PermutatedMNIST and Split CIFAR100. As expected, performance increases with a larger number of random Fourier bases, but with a relatively small number of 256 bases, kernel continual learning already performs well on all datasets. In general, a larger number of random Fourier bases consistently improves performance on all benchmarks. With a relatively small number of 256 bases, variational random features can deliver good performance. Table 4 further shows the impact of the number of random bases on time complexity. It highlights that increasing the number of random bases comes with an increasing computation time for the model at inference time.

*Table 4*

|  | 256 | 512 | 1024 | 2048 |
|---|---|---|---|---|
| Time (s) | 0.0014 | 0.0015 | 0.0015 | 0.0017 |

Kernel continual learning is compared with alternative methods on four benchmarks. The accuracy and forgetting scores in Table 5, below, for Rotated, Permuted MNIST and Split CIFAR100 are all adopted from Mirzadeh, S. I., Farajtabar, M., Pascanu, R., and Ghasemzadeh, H., Understanding the role of training regimes in continual learning, arXiv preprint arXiv:2006.06958, 2020, and results for miniImageNet are from Chaudry, A., Khan, N., Dokania, P., and Torr, P. H. S., Continual Learning in Low-rank Orthogonal Subspaces, arXiv:2010.11635v2 [cs.LG]. The column "*if*" indicates whether a model utilizes a memory, and if so, the column *"when"* denotes whether the memory data are used during training time or test time. Our method achieves better performance in terms of average accuracy and average forgetting. Moreover, as compared to memory-based methods such as A-GEM and ER-Reservoir, which replay over previous tasks (*when* = Train), kernel continual learning does not require replay, enabling kernel continual learning of at least some embodiments to be efficient during training time. Also for the most challenging miniImageNet dataset kernel continual learning performs better than other methods, both in terms of accuracy and forgetting. In FIGS. 9A-C, kernel continual learning by variational random features is compared with other methods in terms of average accuracy over 20 consecutive tasks. Kernel continual learning performs consistently better. It is worth noticing that on the relatively challenging Split CIFAR100 dataset, the accuracy of kernel continual learning drops a bit at the beginning but starts to increase when observing more tasks. This indicates a positive forward transfer from previous tasks to future tasks. All hyperparameters to reproduce the results in FIGS. 9A-C and Table 5 are provided in Table 6, below:

Table 5: Comparison to Alternative Methods

| Method | Memory | | Permuted MNIST | | Rotated MNIST | | Split CIFAR100 | | Split miniImageNet | |
|---|---|---|---|---|---|---|---|---|---|---|
| | If | When | Accuracy | Forgetting | Accuracy | Forgetting | Accuracy | Forgetting | Accuracy | Forgetting |
| Lower Bound: Naive-SGD | No | - | 44.4±2.46 | 0.53±0.03 | 46.3±1.37 | 0.52±0.01 | 40.4±2.83 | 0.31±0.02 | 36.1±1.31 | 0.24±0.03 |
| EWC | No | - | 70.7±1.74 | 0.23±0.01 | 4.85±1.24 | 0.48±0.01 | 42.7±1.89 | 0.28±0.03 | 34.8+2.34 | 0.24±0.04 |
| AGEM | Yes | Train | 65.7±0.51 | 0.29±0.01 | 55.3±1.47 | 0.42±0.01 | 50.7±2.32 | 0.19±0.04 | 42.3±1.42 | 0.17±0.01 |
| ER-Reservoir | Yes | Train | 72.4±0.42 | 0.16±0.01 | 69.2±1.10 | 0.21±0.01 | 46.9±0.76 | 0.21±0.03 | 49.8+2.92 | 0.12±0.01 |
| Stable SGD | No | - | 80.1±0.51 | 0.09+0.01 | 70.8±0.78 | 0.10±0.02 | 59.9±1.81 | 0.08±0.01 | - | - |
| ***Kernel Continual Learning*** | **Yes** | **Test** | **85.5±0.78** | **0.02±0.00** | **81.8±0.60** | **0.01±0.00** | **62.7±0.89** | **0.06±0.01** | **53.3±0.57** | **0.04±0.00** |
| Upper Bound: multi-task learning | No | - | 86.5±0.21 | 0.0 | 87.3±0.47 | 0.0 | 64.8±0.72 | 0.0 | 65.1 | 0.0 |

*Table 6: Hyperparameters*

| Method | Permuted MNIST | Rotated MNIST | Split CIFAR100 | Split miniImageNet |
|---|---|---|---|---|
| Batch Size | 10 | 10 | 10 | 10 |
| Learning Rate (LR) | 0.1 | 0.1 | 0.3 | 0.3 |
| LR Decay Factor | 0.8 | 0.8 | 0.95 | 0.95 |
| Momentum | 0.8 | 0.8 | 0.8 | 0.8 |
| Dropout | 0.5 | 0.5 | 0.02 | 0.02 |
| Coreset Size | 20 | 20 | 20 | 30 |
| Number of Bases | 1024 | 1024 | 2048 | 2048 |
| Number of Tasks | 20 | 20 | 20 | 20 |
| Tau | 0.01 | 0.01 | 0.01 | 0.01 |

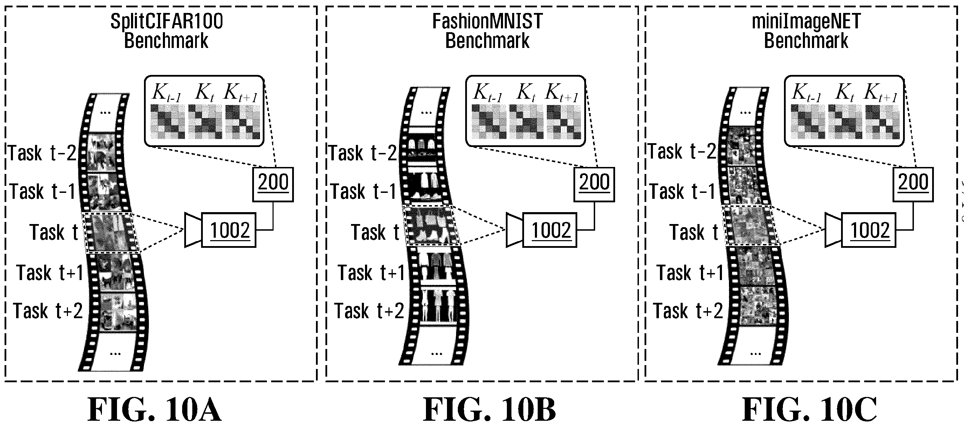

FIGS. 10A-C depict example applications of kernel continual learning to classify an audio and/or video signal. More particularly, FIGS. 10A-C respectively depict classification of a SplitCIFAR100 dataset, FashionMNIST dataset, and miniImageNET dataset. The signal is acquired using a sensor such as a camera 1002, which is communicatively coupled to the system 200 for kernel continuing learning of FIG. 2. In each of FIGS. 10A-C, various tasks {$Task_{t-2}$, $Task_{t-1}$, $Task_t$, $Task_{t+1}$, $Task_{t+2}$} and their corresponding datasets {$D_{t-2}$, $D_{t-1}$, $D_t$, $D_{t+1}$, $D_{t+2}$} are captured by the camera 1002 and processed by the system 200. In accordance with FIGS. 1A and 1B, task specific kernels {$K_{t-2}$, $K_{t-1}$, $K_t$, $K_{t+1}$, $K_{t+2}$} are determined for each and used for classifying the objects comprising each of the tasks.

As another example application, applying a kernel-based classifier as described herein is used to perform recognition of hand-written digits in different rotation angles. Each rotation angle corresponds to a task, and those tasks are analyzed sequentially. Once trained on the current task of a certain angle, the kernel-based classifier recognizes digits in various different angles that it has previously been trained on without a need to retrain the model.

As described herein, kernel continual learning is a simple but effective variation of continual learning with kernel-based classifiers. To mitigate catastrophic forgetting, instead of using shared classifiers across tasks, task-specific classifiers are trained based on kernel ridge regression. Specifically, an episodic memory is used to store a subset of training samples for each task, which is referred to as the coreset. Kernel learning is formulated as a variational inference problem by treating random Fourier bases as the latent variable to be inferred from the coreset. By doing so, an adaptive kernel is generated for each task while requiring a relatively small memory size.

The processor used in the foregoing embodiments may comprise, for example, a processing unit (such as a processor, microprocessor, or programmable logic controller) or a microcontroller (which comprises both a processing unit and a non-transitory computer readable medium). Examples of computer readable media that are non-transitory include disc-based media such as CD-ROMs and DVDs, magnetic media such as hard drives and other forms of magnetic disk storage, semiconductor based media such as flash media, random access memory (including DRAM and SRAM), and read only memory. As an alternative to an implementation that relies on processor-executed computer program code, a hardware-based implementation may be used. For example, an application-specific integrated circuit (ASIC), field programmable gate array (FPGA), system-on-a-chip (SoC), or other suitable type of hardware implementation may be used as an alternative to or to supplement an implementation that relies primarily on a processor executing computer program code stored on a computer medium.

The embodiments have been described above with reference to flow, sequence, and block diagrams of methods, apparatuses, systems, and computer program products. In this regard, the depicted flow, sequence, and block diagrams illustrate the architecture, functionality, and operation of implementations of various embodiments. For instance, each block of the flow and block diagrams and operation in the sequence diagrams may represent a module, segment, or portion of code, which comprises one or more executable instructions for implementing the specified action(s). In some alternative embodiments, the action(s) noted in that block or operation may occur out of the order noted in those figures. For example, two blocks or operations shown in succession may, in some embodiments, be executed substantially concurrently, or the blocks or operations may sometimes be executed in the reverse order, depending upon the functionality involved. Some specific examples of the foregoing have been noted above but those noted examples are not necessarily the only examples. Each block of the flow and block diagrams and operation of the sequence diagrams, and combinations of those blocks and operations, may be implemented by special purpose hardware-based systems that perform the specified functions or acts, or combinations of special purpose hardware and computer instructions.

The terminology used herein is for the purpose of describing particular embodiments only and is not intended to be limiting. Accordingly, as used herein, the singular forms "a", "an", and "the" are intended to include the plural forms as well, unless the context clearly indicates otherwise (e.g., a reference in the claims to "a challenge" or "the challenge" does not exclude embodiments in which multiple challenges are used). It will be further understood that the terms "comprises" and "comprising", when used in this specification, specify the presence of one or more stated features, integers, steps, operations, elements, and components, but do not preclude the presence or addition of one or more other features, integers, steps, operations, elements, components, and groups. Directional terms such as "top", "bottom", "upwards", "downwards", "vertically", and "laterally" are used in the following description for the purpose of providing relative reference only, and are not intended to suggest any limitations on how any article is to be positioned during use, or to be mounted in an assembly or relative to an environment. Additionally, the term "connect" and variants of it such as "connected", "connects", and "connecting" as used in this description are intended to include indirect and direct connections unless otherwise indicated. For example, if a first device is connected to a second device, that coupling may be through a direct connection or through an indirect connection via other devices and connections. Similarly, if the first device is communicatively connected to the second device, communication may be through a direct connection or through an indirect connection via other devices and connections. The term "and/or" as used herein in conjunction with a list means any one or more items from that list. For example, "A, B, and/or C" means "any one or more of A, B, and C".

It is contemplated that any part of any aspect or embodiment discussed in this specification can be implemented or combined with any part of any other aspect or embodiment discussed in this specification.

The scope of the claims should not be limited by the embodiments set forth in the above examples, but should be given the broadest interpretation consistent with the description as a whole.

It should be recognized that features and aspects of the various examples provided above can be combined into further examples that also fall within the scope of the present disclosure. In addition, the figures are not to scale and may have size and shape exaggerated for illustrative purposes.

## Claims

1. A method comprising:

   (a) obtaining a dataset corresponding to a classification task;
   (b) performing feature extraction on the dataset using an artificial neural network; and
   (c) constructing a kernel using features extracted during the feature extraction for use in performing the classification task.

2. The method of claim 1, wherein the dataset is a current task dataset and the classification task is a current classification task, and further comprising selecting a coreset dataset from the current task dataset, wherein the feature extraction is performed on the coreset dataset, and wherein the kernel is constructed using the features extracted from the coreset dataset.

3. The method of claim 2, further comprising performing the current classification task by applying the kernel to features extracted from the current task dataset.

4. The method of claim 3, wherein the feature extraction is also performed on elements of the current task dataset other than the coreset dataset, and wherein performing the current classification task comprises applying the kernel to features extracted from elements of the current task dataset other than the coreset.

5. The method of any one of claims 2 to 4, wherein the coreset dataset is selected uniformly between existing classes of the current task dataset.

6. The method of claim 1, wherein the dataset is an input query dataset, and further comprising:

   (a) obtaining a task identifier that corresponds to the input query dataset;
   (b) retrieving, using the task identifier, a coreset dataset corresponding to a classification task to be performed on the input query dataset, wherein the feature extraction is performed on the coreset dataset and on the input query dataset, and wherein the kernel is constructed using the features extracted from the coreset dataset; and
   (c) classifying the input query dataset by applying the kernel to the features extracted from the input query dataset.

7. The method of claim 6, wherein the dataset comprises an image.

8. The method of any one of claims 1 to 7, wherein constructing the kernel comprises applying kernel ridge regression.

9. The method of any one of claims 1 to 8, wherein the artificial neural network comprises at least one of a convolutional neural network and a multilayer perceptron.

10. The method of any one of claims 2 to 9, further comprising determining random Fourier features from the coreset dataset, and wherein the kernel is constructed using the random Fourier features.

11. The method of any one of claims 6 to 10, wherein the coreset dataset is selected uniformly between existing classes of the input query dataset.

12. The method of any one of claims 1 to 11, wherein the feature extraction is performed using a backbone network shared across multiple classification tasks.

13. A system comprising:

    (a) a processor;
    (b) a non-transitory computer readable medium communicatively coupled to the processor and having stored thereon computer program code that is executable by the processor and that, when executed by the processor, causes the processor to perform the method of any one of claims 1 to 12.

14. The system of claim 13, further comprising a memory communicatively coupled to the processor for storing the coreset dataset.

15. A non-transitory computer readable medium having stored thereon computer program code that is executable by a processor and that, when executed by the processor, causes the processor to perform the method of any one of claims 1 to 12.

FIG. 1A

**FIG. 1B**

EP 4 102 419 A1

200

| User Input Devices 204 | | Display Controller 210 |
| RAM 206 | Processor 202 | Display 212 |
| Non-volatile Storage 208 | | GPUs 214 |
| | | Network Interface 216 |

**FIG. 2**

$M$: Memory   $C$: Coreset   $\kappa$: Kernel Matrix   $h_\theta$: Feature Extractor   $f_\phi$: Inference Network   $w$: Random Fourier Base

**FIG. 3**

EP 4 102 419 A1

FIG. 4A

FIG. 4B

FIG. 4C

**FIG. 5A**

**FIG. 5B**

**FIG. 5C**

**FIG. 6**

**FIG. 7**

**FIG. 8**

**FIG. 9A**

**FIG. 9B**

**FIG. 9C**

SplitCIFAR100
Benchmark

$K_{t-1}$  $K_t$  $K_{t+1}$

200

Task t-2

Task t-1

Task t

Task t+1

Task t+2

1002

**FIG. 10A**

FashionMNIST
Benchmark

$K_{t-1}$  $K_t$  $K_{t+1}$

200

Task t-2

Task t-1

Task t

Task t+1

Task t+2

1002

**FIG. 10B**

miniImageNET
Benchmark

$K_{t-1}$  $K_t$  $K_{t+1}$

200

Task t-2

Task t-1

Task t

Task t+1

Task t+2

1002

**FIG. 10C**

EP 4 102 419 A1

FIG. 11

EP 4 102 419 A1

Europäisches
Patentamt

European
Patent Office

Office européen
des brevets

# EUROPEAN SEARCH REPORT

Application Number

**EP 21 17 9161**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIANG SUN ET AL: "Robustness through prior knowledge: using explanation-based learning to distinguish handwritten Chinese characters", INTERNATIONAL JOURNAL OF DOCUMENT ANALYSIS AND RECOGNITION (IJDAR), SPRINGER, BERLIN, DE, vol. 10, no. 3-4, 30 October 2007 (2007-10-30), pages 175-186, XP019545259, ISSN: 1433-2825, DOI: 10.1007/S10032-007-0053-1 * page 175 - page 186 * | 1-15 | INV. G06N20/10 G06N7/00 G06N3/04 G06N3/08 |
| X | PARK JUN-GEUN JGPARK@CSAIL MIT EDU ET AL: "Online pose classification and walking speed estimation using handheld devices", PROCEEDINGS OF THE SIGCHI CONFERENCE ON HUMAN FACTORS IN COMPUTING SYSTEMS, ACM, 2 PENN PLAZA, SUITE 701 NEW YORK NY 10121-0701 USA, 5 September 2012 (2012-09-05), pages 113-122, XP058618454, DOI: 10.1145/2370216.2370235 ISBN: 978-1-4503-2473-1 * page 113 - page 122 * | 1-15 | |
| X | CN 111 723 838 A (UNIV ROCKET FORCE ENGINEERING PLA) 29 September 2020 (2020-09-29) * paragraph [0001] - paragraph [0106] * * figures 1-7 * | 1-15 | TECHNICAL FIELDS SEARCHED (IPC) G06N |

The present search report has been drawn up for all claims

| Place of search | Date of completion of the search | Examiner |
|---|---|---|
| Munich | 13 January 2022 | Ernst, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 9161

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2022

| Patent document cited in search report | Publication date | Patent family member(s) | Publication date |
|---|---|---|---|
| CN 111723838 A | 29-09-2020 | NONE | |

EPO FORM P0459

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FOLLOWING KIRKPATRICK, J. ; PASCANU, R. ; RABINOWITZ, N. ; VENESS, J. ; DESJARDINS, G. ; RUSU, A. A. ; MILAN, J. ; QUAN, J. ; RAMAL-HO, T. ; GRABSKA-BARWINSKA, A. et al.** Overcoming catastrophic forgetting in neural networks. *Proceedings of the national academy of sciences,* 2017, vol. 114 (13), 3521-3526
- **MIRZADEH, S. I. ; FARAJTABAR, M. ; PASCANU, R. ; GHASEMZADEH, H.** *Understanding the role of training regimes in continual learning,* 2020

- **ZENKE, F. ; POOLE, B. ; GANGULI, S.** Continual learning through synaptic intelligence. *Proceedings of machine learning research,* 2017, vol. 70, 3987
- **VINYALS, O. ; BLUNDELL, C. ; LILLICRAP, T. ; KAVUKCUOGLU, K. ; WIERSTRA, D.** *Matching Networks for One Shot Learning,* 2017
- **RUSSKOVSKY, O. ; DENG, J. ; SU, H. ; KRAUSE, J. ; SATHEESH, S. ; MA, S. ; HUANG, Z. ; KARPA-THY, A. ; KHOSLA, A. ; BERNSTEIN, M.** *ImageNet Large Scale Visual Recognition Challenge*
- **CHAUDRY, A. ; KHAN, N. ; DOKANIA, P. ; TORR, P. H. S.** *Continual Learning in Low-rank Orthogonal Subspaces*